(19) Europäisches Patentamt
European Patent Office
Office européen des brevets

(11) **EP 2 299 387 A1**

(12) **EUROPEAN PATENT APPLICATION**

(43) Date of publication:
**23.03.2011 Bulletin 2011/12**

(51) Int Cl.:
*G06K 9/32* (2006.01)          *G09B 21/00* (2006.01)
*G10L 13/04* (2006.01)

(21) Application number: **10175319.2**

(22) Date of filing: **03.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **04.09.2009 BE 200900544**

(71) Applicant: **Koba Vision**
**3971 Leopoldsburg (BE)**

(72) Inventors:
• **The inventor has agreed to waive his entitlement to designation.**

(74) Representative: **Sarlet, Steven Renaat Irène et al**
**Gevers & Vander Haeghen SA**
**Holidaystraat, 5**
**B-1831 Diegem (BE)**

(54) **Device and method for recognizing and reading text out loud**

(57)     Method for converting text information (3) from a document (1), which text information is presented in the form of text blocks (4), to digital text data (24) for a speech generator (7) or to speech (23), whereby an upright axis (11) is inserted in a digitized image (2), and the text blocks (4) being intersected by said axis (11) are selected, and whereby two additional boundary lines (12, 13) are inserted in the digitized image (2), the position of which being determined by the height and location of the already selected text blocks for selecting additional text blocks. The invention also relates to a device (29) for performing this method.

Fig. 4C

## Description

### FIELD OF THE INVENTION

The invention relates to a method for converting text information from a document, which text information is presented in the form of text blocks, to digital text data for a speech generator according to the preamble of claim 1. The invention also relates to a device for performing this method, according to the preamble of the independent device claim, and for a computer program for performing said method on said device.

### BACKGROUND OF THE INVENTION

In our daily life we get a lot of information presented in a printed form, such as e.g. a novel, a newspaper, a magazine, a letter, an advertisement leaflet, an invoice, a statement of account, etc. The layout of such printed information can vary strongly, ranging from very simple (as in a typical novel) to very complex (as in a newspaper). People with reduced vision often have difficulty reading this information, but can usually be helped well with glasses. For people with a low vision of e.g. less than 3 / 10 of normal sight, glasses offer no solution, but there are several other systems on the market such as scanner devices with speech, or magnifier devices with a screen for reading such printed information.

When using such a scanner device, the user typically places the document, e.g. an A4 sized page on the scanner glass, the device scans the entire page, performs OCR (optical character recognition), and reads out the whole page. A problem with such a device is that it usually starts reading in the top left corner, and reads every text block on the page, in some order, resulting in a spoken version of the text which is not always coherent or relevant, but the user has no alternative but to listen to the entire page.

US 2006/006235 describes a portable reading machine where the user can select a portion of the image for which he wants to hear the text read, e.g. by referring to where the relevant text lies in the layout. If the user does not specify a region, the device automatically selects which regions of the image to process. This selection is based on the layout model that has been chosen for the document. Once the device starts the text-to-speech processing, e.g. at the location indicated by the user, the reading machine checks to see if there are additional regions to be read based on the layout model or, in the absence of a model match, based on "simple top-to-bottom flow of text", although the publication does not give details about such flow. A disadvantage of this machine is that the selection of text blocks to be read does not work well for various documents, especially those containing highly formatted text and graphics.

### DISCLOSURE OF THE INVENTION

It is an aim of the present invention to provide a method for converting text information from a document to digital text data for a speech generator, whereby a better selection is made of the text blocks to be read for obtaining a text with a higher cohesion.

This aim is achieved by a method having the technical features of the first claim. Thereto, the method according to the present invention comprises the following steps: a) capturing an image of at least a portion of the document with said text information by means of a camera, and digitizing the image; b) recognizing text blocks and determining a location of the recognized text blocks in the digitized image; c) selecting text blocks for the speech generator from the recognized text blocks; d) converting the selected text blocks from the digitized image to digital text data by means of optical character recognition; wherein the selection of text blocks comprises the steps of: - making a first selection of text blocks by selecting those text blocks which are intersected by an upright axis inserted at a predetermined position in the digitized image, which position is independent of the location of the recognized text blocks and of their textual contents; - determining a first resp. second distance from the vertices of the selected text blocks to the axis, whereby those vertices are chosen which are located on a first resp. second side of the axis; - determining a height of each selected text block; - cal-culating a first resp. second weighted average distance from said first resp. second distances to the axis, whereby the weighting factor for each distance is proportional to the height of the text block to which the vertex belongs; - in-serting a first resp. second boundary line in the digitized image, parallel to the axis on the first resp. second side of the axis, at the first resp. second weighted average distance from the axis; - making a second selection of text blocks by selecting those text blocks which are located completely between the boundary lines but are not intersected by the axis, and adding the second selection of text blocks to the first selection of text blocks thereby forming the selection of text blocks for the speech generator.

The selection of relevant text blocks is done in a two-step approach. In a first step an upright axis is placed at a predetermined position in the digitized image, and only those text blocks which are intersected by the axis are identified as relevant information. The inventor has found that this selection of text blocks yields digital text data with a high degree of coherence. By adding to that first selection of text blocks additional text blocks which are located completely between said first and second boundary line, text blocks such as short-titles, which were not intersected by the axis, but which logically belong to the text blocks that were selected in the first step, are added to the selection in a second step, yielding text data with an even higher degree of coherence. The second selection is based on the position of the text blocks relative to the boundary lines, the position of the latter being dependent on the position of the text blocks selected in the first selection. The inventor has found that when the boundary lines are placed at a position which is calculated as a weighted average as described above, the selection algorithm yields digital text data with a surprisingly high degree of consistency for most types of documents, even with very different layouts.

An additional advantage of the method according to the present invention is that the selection can be performed very fast (for example in less than 1 second on an Intel® Atom™ processor at 1,6 GHz). This is achieved by placing the upright axis at a predetermined position in the digitized image independent of the location of the recognized text blocks (let alone their textual content), and by making a first selection of text blocks by choosing those text blocks which are intersected by said axis. Using the positions of these selected text blocks, two boundary lines are calculated, and a second selection of text blocks is made. Also the second selection is based only on the location of the text blocks, not on their textual contents, so that the selection of all the relevant text blocks to be read can occur before any character recognition (OCR) is performed. Since the selection algorithm can be performed by simple mathematical calculations on the coordinates of the vertices of the text blocks, the selection can be performed very fast, and other complex techniques such as finding the best matching layout-template, which is very time consuming, can be avoided.

Because the axis is inserted in a position in the image, which position is independent of the location of the recognized text blocks and of the textual content thereof, the result of the selection of the text blocks is highly predictable for the user.

In addition, by using an upright axis instead of a point, multiple text blocks can be selected in one operation, without indicating them one by one. A typical user with sufficient sight to recognize the layout of the document, but insufficient sight for reading the textual information thereof can conveniently make use of this comprehensive and intuitive selection mechanism by positioning the document in such a position before the camera that the text blocks with the relevant information for him are intersected by the axis in the digitized image. After that the further selection of additional text blocks and the conversion to digital text data for a speech generator (or to speech) will run automatically.

An advantage of making the selection of all the text blocks before reading any of them is that it allows the user to visualize the selected blocks, so that he can correct the selection if needed before the document is read by shifting the document in front of the camera, rather than finding out after the page is almost fully read that some relevant part was not selected or some unwanted parts were also selected, in which case he has to start all over. In this way a lot of time can be saved, and frustration can be avoided. In this way the user maintains control over which parts of the text are to be read, without the need for indicating all the relevant parts.

By selecting text blocks which are intersected by an axis rather than selecting text blocks located e.g. on the right hand side of the axis, the result of the selection is much less dependent on the exact position of the document in view of the camera, because the user does not have to align the (usually small) white borders between text blocks to the axis himself. This largely increases the convenience for the user. The second step of the algorithm increases this convenience even more by adding further relevant text blocks which were not intersected but logically belong to the selected text blocks, thereby relaxing the exact positioning of the document even more.

The inventor has also found that by placing the boundary lines at the weighted average distance which depends on the width and height of the blocks selected in the first step instead of inserting them at predefined distances from the axis, the selection is independent of the zoom factor of the camera, thereby further increasing the user convenience.

Optionally the selection of text blocks in the method according to the present invention further comprises the steps of: - making a third selection of text blocks, by calculating for each text block which is intersected by the first or second boundary line but is not selected in the preceding selection steps a first area located outside of the two boundary lines, and a second area located between the two boundary lines, and calculating a ratio of the second area to a total area of the text block, the total area being the sum of the first area and the second area, and selecting those text blocks for which the ratio is larger than or equal to a predetermined percentage; - adding the third selection of text blocks to the first and the second selection of text blocks, thereby forming the selection of text blocks for the speech generator.

By adding to the first and second selection of text blocks additional text blocks which have at least a predetermined ratio of their area located between the first and second boundary line as described above, those text blocks that do not fall completely (i.e. 100%) between the two boundary lines, but e.g. for 90% between the boundary lines and 10% outside of the boundary lines, are also added to the selection, thereby further increasing the coherence of the selected text blocks.

Preferably an image of the axis is projected on the document.

By projecting an image of the axis on the document, the location of the text blocks relative to the axis will be clearly visible, allowing the document to be positioned more easily and more accurately, and the text read having a higher coherence.

Preferably a processed image is formed from the captured and digitized image, and is displayed on a screen.

In this way the advantages of known magnification devices are combined with the conversion of text information into digital data for a speech generator or into speech, so that the text information is not only read out loud, but also displayed on a screen, allowing the user to visually follow the text information being read. Optionally the captured and digitized image can be enhanced by image processing techniques such as edge corrections and/or color enhancement to increase the readability of the information.

Preferably one or more of the following elements is inserted in the processed image: the axis, the recognized text blocks, the selected text blocks.

By displaying the processed (and optionally enhanced and/or enlarged) image on the display along with the axis, a vision impaired user can position the document easier, faster and/or more accurately relative to the axis. By displaying the processed image on the screen along with the recognized and/or the selected text blocks, the vision impaired user gets visual feedback on the location of the text blocks which are recognized and on those which are selected, allowing the user to optionally adjust the position of the document before reading it. In this way a lot of time can be saved, and frustration can be avoided, since otherwise the user would get the feedback of a mal positioned document only much later, in which case he could only adjust the document much later and would have to start all over again.

Preferably the method according to the invention further comprises the following steps: g) keeping a progress indicator up to date during the conversion of the digital text data into the audio signal, for indicating which part of the text data is already converted into the audio signal; h) determining when the conversion of the digital text data to the audio signal has stopped, and buffering a portion of the last converted digital text data in a memory in the form of stop data; i) performing steps a) to f) for a second image, whereby said determination of the starting position is performed by checking whether stop data is buffered in the memory, in which case the buffered stop data is retrieved from the memory, and the digital text data is scanned for a position S wherein the text data matches said stop data according to a predefined matching criterion, and choosing the position S as the starting position if the matching criterion is satisfied, or choosing the beginning of the digital text data as the starting position if the matching criterion is not satisfied or in case no stop data was buffered in the memory.

By tracking which part of the text information is already converted to speech, it is possible to identify the text last read and to buffer a portion of it in memory as stop data, so that this stop data may be found back at a later time in the same or in another digitized image, with or without the document being shifted. In this way, a document containing text information which for example has a height which does not fully fit in one captured image (such as e.g. a newspaper) can be converted to speech in several steps without repeating part of the text which has already been read. In each step the document is slightly shifted upwards, but the main advantage is that it does not require that the document is shifted precisely for shifting out the portion of the text just being read outside of the view of the camera. This feature provides a user convenience which should not be underestimated, because most printed documents or articles are higher than 1/2 A4-page (as will be explained further). The inventor has surprisingly found that the probability that the stop data is found back in the digital text data after the document has shifted is enhanced by using an approximating matching criterion instead of an exact match, thereby increasing the system integrity.

It is also an aim of the present invention to provide a device for performing such a method.

It is also an aim of the present invention to provide a computer program for performing such a method on such a device.

## BRIEF DESCRIPTION OF THE DRAWINGS

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention. The drawings are intended to describe the principles of the invention. Embodiments of the invention can use combinations of the different features and elements of different drawings.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.

Fig 1 shows a document containing text information, which text information is presented in the form of text blocks.

Fig 2A shows an image of the portion of the document of Fig 1 which is captured by a camera.

Fig 2B shows in detail the text of one of the text blocks in Fig 2A.

Fig 3A shows the location of the recognized text blocks of the captured and digitized image of Fig 2A.

Fig 3B shows the location of the recognized text blocks in the digitized image of Fig 2A, after the document was shifted in the visual field of the camera.

Fig 4A shows which of the text blocks of Fig 3B are intersected by an upright axis located in the centre of the digitized image, according to an embodiment of the present invention.

Fig 4B shows which of the text blocks of Fig 3A are intersected by an upright axis located in the centre of the digitized image, according to an embodiment of the present invention.

Fig 4C shows how in a variant of Fig 4A the position of a first resp. second boundary line is determined, according to the invention, based on the location of the text blocks that were intersected by the axis.

Fig 4D shows the image of another document with a large text block above extending over almost the entire width of the image, and the position of the axis inserted into the image, and the first and second boundary line, according to an embodiment of the present invention.

Fig 4E shows the image of Fig 4D, where an axis, and a third and fourth boundary line are inserted in the image, based on the maximum distance from the axis, according to an embodiment of the present invention.

Fig 5A shows an image of another document, and shows the stop data when the reading is stopped after pronouncing the word "nunc," according to an aspect of the present invention.

Fig 5B shows a second image of the document of Figure 5A, after the document was shifted upwards, and shows the second starting position from where the reading is resumed, according to an aspect of the present invention.

Fig 6A shows a preferred embodiment of a device for converting text information from a document into an audio signal, according to the invention.

Figure 6B shows an example of a hardware block diagram of the processing electronics of the device of Fig 6A.

Fig 7A shows a schematic of the software components that run in a CPU of the processing electronics of Fig 6A.

Fig 7B show the steps taken by the device of Fig 6A when a start command is given.

Fig 7C shows a flowchart of the algorithm for determining the starting position, according to an aspect of the present invention.

## DETAILED DESCRIPTION OF PREFERRED EMBODIMENTS

REFERENCES

| | |
|---|---|
| 1 | document |
| 2 | digitized image |
| 3 | text information |
| 4 | text block, recognized text block |
| 5 | selected text block |
| 7 | speech generator |
| 8 | optical character recognition (OCR) |
| 11 | upright axis |
| 12 | first boundary line |
| 13 | second boundary line |
| 14 | (blank) zone between text blocks |
| 15 | third boundary line |
| 16 | fourth boundary line |
| 18 | left margin of an image |
| 19 | right margin of an image |
| 20 | progress indication |
| 21 | stop data |
| 22 | starting position |
| 23 | audio-signal, speech |
| 24 | digital text data (for speech generator) |
| 26 | processed image |
| 29 | device |
| 30 | camera |
| 31 | microcontroller |
| 32 | flash |
| 33 | memory |
| 34 | screen |
| 35 | speaker |
| 36 | illumination means |
| 37 | FPGA |
| 38 | HDMI TX |
| 41 | control panel |
| 42 | processing electronics |
| 43 | second PCB |
| 44 | frame buffer |
| 45 | camera interface |
| 46 | first PCB |
| 47 | CPU |
| 80 | interface |
| 81 | text block information |
| 82 | interface |
| 83 | interface |
| 84 | interface |
| 85 | interface |
| 87 | bus |
| S | position of stop data (in the new text) |
| m | centre |

| 101 | text block recognition means |
| 102 | text block selection means |
| 103 | axis insertion means |
| 104 | distance determination means |
| 105 | height determination means |
| 106 | calculation means |
| 107 | boundary line insertion means |
| 108 | area determination means |
| 109 | starting position determination means |
| 110 | projection means |
| 111 | image processing means |
| 112 | progress tracking means |
| 113 | stop detection means |
| 114 | stop data identification means |

It is generally known that the vision of a human being starts to deteriorate from an average age of around 40 years. Besides the degradation of vision due to age, vision problems may also be caused by various diseases or accidents. Vision problems can occur in various forms, the worst form being complete blindness, but problems are usually restricted to a reduction in the detail that the eye can still distinguish, making it difficult to read text when letters cannot be easily distinguished anymore. Without being limited thereto, the invention primarily focuses on the latter group of people who are unable or have difficulty to distinguish letters, but are still able to distinguish the layout of a document.

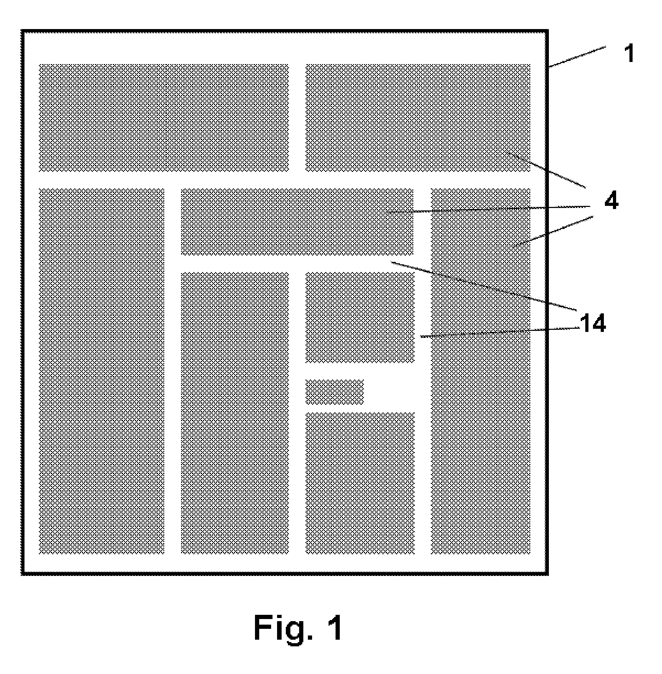

Fig 1 shows a document 1 with text information 3, such as e.g. a newspaper or a magazine, whereby the text information 3 is organized in the form of text blocks 4, which can be discerned by a visual impaired person as areas with text information, but whose text content itself cannot be read. The text blocks 4 are usually separated from each other by blank zones 14. The document 1 may be smaller or equal or larger than an A4-sized page. It may e.g. be a newspaper, a magazine, a letter, a flyer, an invoice, a statement of account, etc.

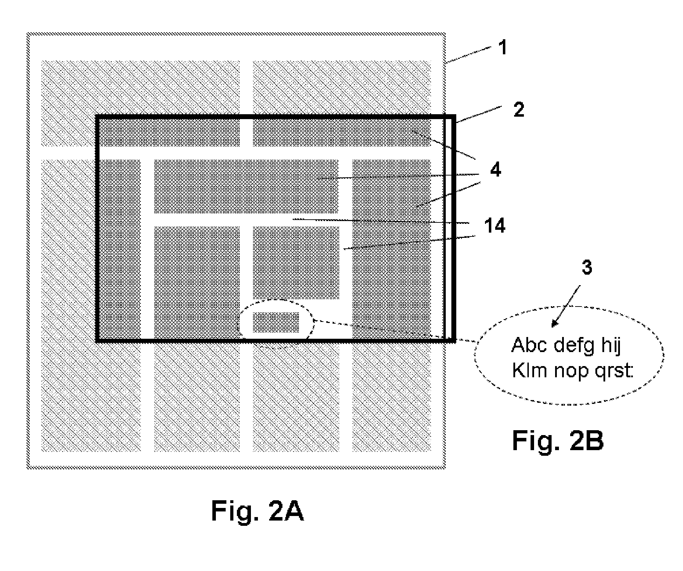

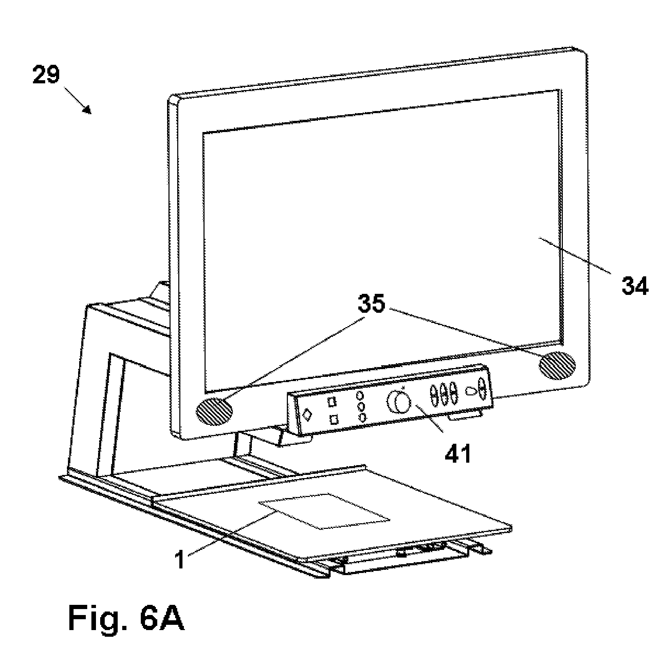

Fig 6A shows a preferred embodiment of a device 29 according to the present invention. It comprises a camera 30 for capturing an image of the document 1, a screen 34, one or more speakers 35, a control panel 41, and processing electronics 42. The camera 30 and the processing electronics 42 are not visible in the figure, but are preferably located on the back of the screen 34. The document 1 of Fig 1 is placed under the screen 34, in the visual field of the camera 30, which captures an image of a portion of the document 1, as indicated by a bold rectangle in Fig 2A. This image is digitized. The areas with text in the digitized image 2 are also called text blocks 4 (like the areas of text on the document itself). Fig 2B shows in detail the text of one of the text blocks 4 of Fig 2A. This text block 4 can e.g. be a title or a heading.

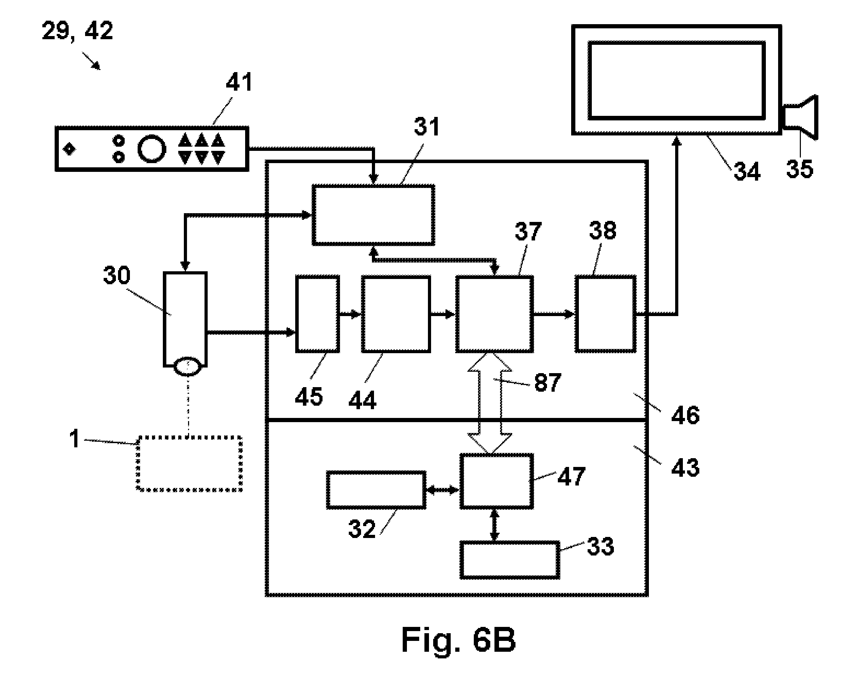

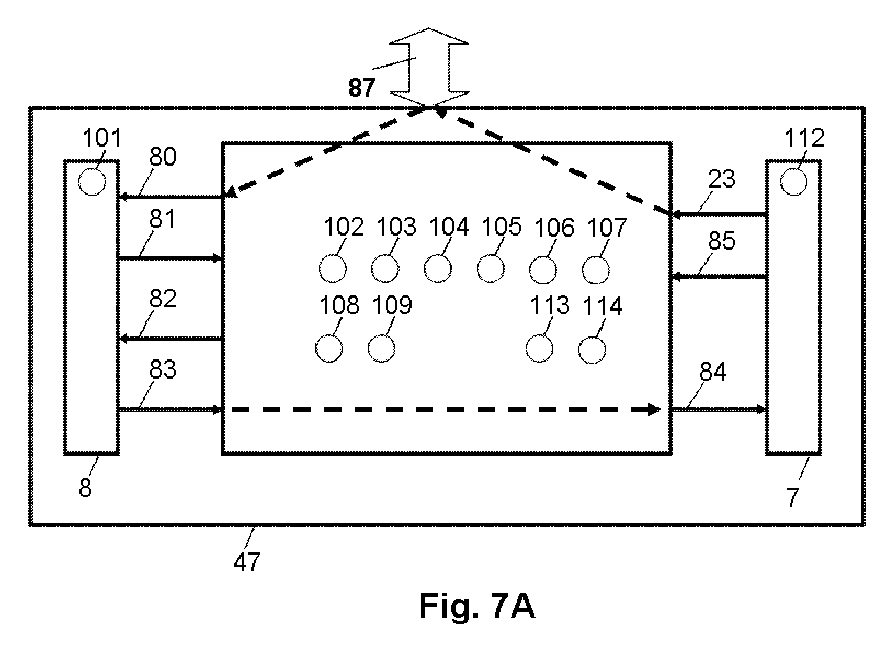

Fig 6B shows an example of a hardware block diagram of the device 29 of Fig 6A. The device 29 comprises a control panel 41, a screen 34, a camera 30 and processing electronics 42. Via the control panel 41 commands can be given to the processing electronics 42. Thereto an output of the control panel 41 is connected to an input of a microcontroller 31 located in the processing electronics 42. Through the camera 30, an image 2 of the document 1 located in the visual field of the camera 30 can be captured. An output of the camera 30 is connected to an input of the camera interface 45 of the processing electronics 42, for transferring the image 2 captured by the camera 30 to the processing electronics 42. The signal from the camera 30 can for example be an analog video signal such as e.g. an analog YPbPr signal, and the camera interface 45 may e.g. comprise a video ADC (analog to digital converter) for converting the analog video signal into a digital video signal. The camera interface 45 may however also comprise a converter from an LVDS signal to a TTL signal, such as when the camera has a digital output. An output of the camera interface 45 is connected to an input of a frame buffer 44 for buffering a digitized image 2. An output of the frame buffer 44 is connected to an input of a field programmable gate array (FPGA) 37. This may e.g. be an FPGA from Xilinx® or Altera®. It should be noted that the frame buffer is optional, and as an alternative to the frame buffer a memory directly connected to the FPGA may also be used. The microcontroller 31 is connected to the FGPA via a control bus (e.g. I2C or UART) for passing commands from the control panel 41, such as e.g. a command for starting or stopping the conversion of the document 1 to speech, or a command for inverting the colors on the screen 34. An output of the FPGA 37 is connected to an input of an HDMI transmitter 38 for passing an audio and/or video signal to the monitor 34. The output of the HDMI transmitter 38 is connected to an input of the display 34, for example via an HDMI cable. But instead of an HDMI cable a DVI cable may also be used. The screen (or display or monitor) 34 then displays the image on the screen, and renders the sound on one or more speakers 35. The camera 30 preferably has an automatic zoom function, and the control panel 41 preferably has a rotatable zoom button for controlling the magnification of the camera 30. To this end, the microcontroller 31 is connected to the camera 30 via a control bus. This may be the same or another control bus as the one between the microcontroller 31 and the FPGA 37. The FPGA is also connected to a CPU 47 via a bus 87 through which a.o. image data captured by the camera 30 can be passed. The CPU 47 in turn is connected to a FLASH memory 32, wherein at least one program to be executed on the CPU is stored. The CPU is also connected to a RAM memory 33 that serves as a working storage and for storing a copy of the digitized image 2, upon which operations can be performed, as will be described further. The program comprises several components (i.e. software routines) which may interact with each other, and a control component that controls the other components and regulates the interactions. The main components are an OCR component 8 for optical character recognition and a speech generator component 7, as shown in Fig 7A. The software in its entirety running on the CPU 47 comprises a.o. text block recognition means (101), text block selection means (102), axis insertion means (103), distance determination means (104), height determination means (105), calculation means (106), boundary line insertion means (107), area determination means (108), starting positioning determination means (109), progress tracking means (112), stop detection means (113), and stop data identification means (114).

Preferably the processing electronics 42 is implemented on a first PCB (printed circuit board) 46 and a second PCB 43 as indicated by the line intersecting the bus 87 (Fig 6B). In this way a modular implementation is provided for two related but different devices: a reading device as described above, where both PCBs 43 and 46 are present, or a classical magnifier device without speech, in which only the first PCB 46 is present. By providing an appropriate interface connector, it is possible to upgrade a device 29 which was originally sold as a pure magnifier viewer with voice services later, by adding the second PCB 43. This partitioning is however not essential for the invention, and the processing electronics 42 may also be implemented on a single PCB, or the first PCB 46 may e.g. be a motherboard upon which an optional COM module (computer on module) may be plugged having the voice features. Other hardware implementations may however also be possible.

The invention provides a method for converting text information 3 from a document 1, which text information 3 is presented in the form of text blocks 4, to digital text data 24 for a speech generator 7 which may be internal or external to the device 29, the document 1 being located in a field of vision of a camera 30, the method comprising the following steps: a) capturing an image of at least a portion of the document 1 with said text information 3 by means of the camera 30, and digitizing the image; b) recognizing text blocks and determining a location of the recognized text blocks 4 in the digitized image 2; c) selecting text blocks 5 for the speech generator 7 from the recognized text blocks 4; d) converting the selected text blocks 5 from the digitized image 2 to digital text data 24 by means of optical character recognition, whereby the selection of text blocks 5 is preferably done in a two-step approach. A first selection of text blocks comprises the steps of: - making a first selection of text blocks by selecting those text blocks T4, T6 which are intersected by an upright axis 11 inserted at a predetermined position in the digitized image 2, which position is independent of the location of the recognized text blocks 4 and of their textual contents.

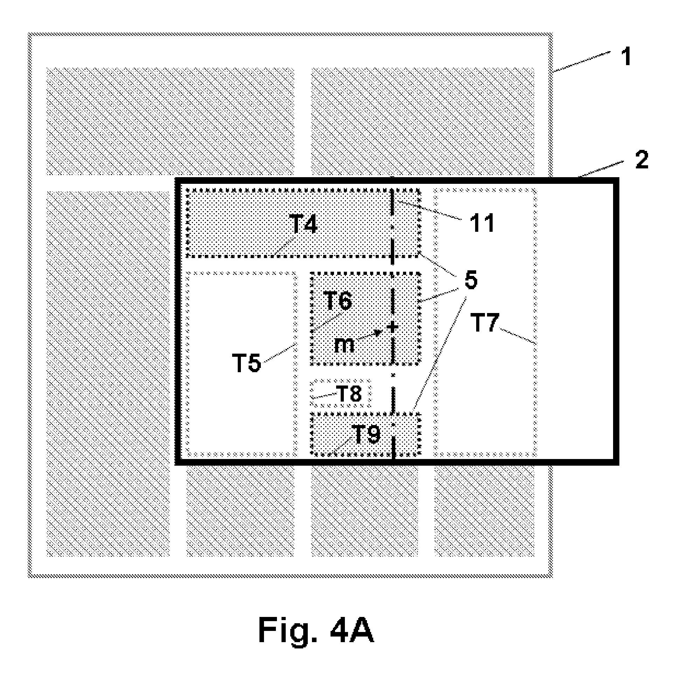

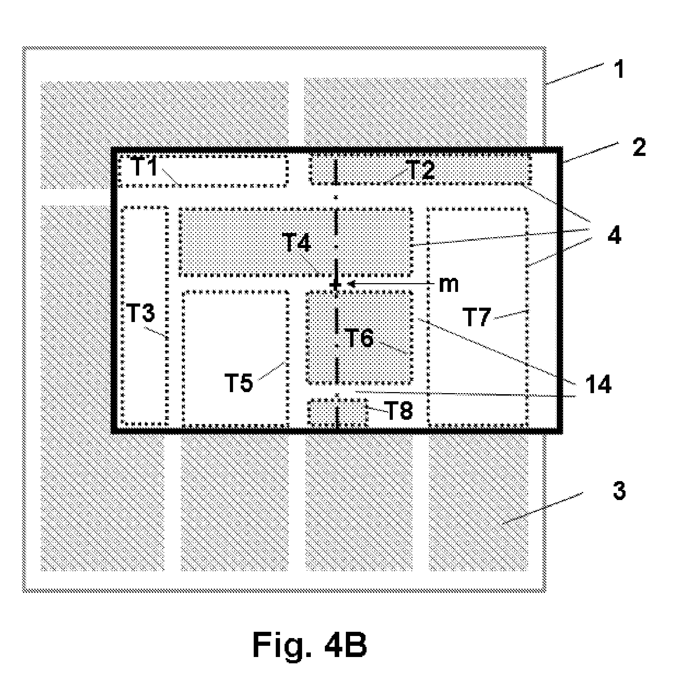

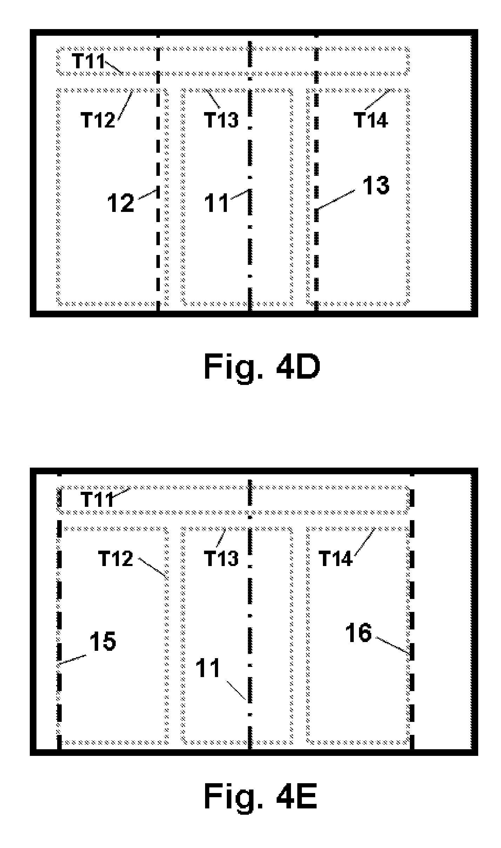

The first step of the selection is illustrated in Fig 4A, where the text blocks T4, T6 and T9 are intersected by the upright axis 11, and in Fig 4B where the text blocks T2, T4, T6 and T8 are intersected. Note that the first step of selecting text blocks based on intersection by the axis 11 has the important advantage that incomplete sentences, such as e.g. present in T1 and T3 of Fig 4B will not be read, but are automatically filtered out.

In order to be able to perform this method, the device 29 according to the present invention comprises text block recognition means 101, text block selection means 102, optical character recognition means 8 and axis insertion means 103 which are preferably implemented in software on the CPU 47, whereby the text recognition means 101 are preferably part of the OCR component 8, and a camera 30 and digitizing means which may e.g. be implemented in the camera 30 or in the camera interface 45, which are typically implemented in hardware.

Irrespective of the speech generator 7 being internal or external of the device 29 performing said method, the intention is that the text information 3 from the document 1 is ultimately converted to an audio signal 23. Within this application the terms "audio signal" and "speech" and "voice data" have the same meaning, and "conversion of digital text data" and "reading" have the same meaning, unless specifically mentioned otherwise. Said speech generator 7 may e.g. be an internal hardware component, such as e.g. a DSP (digital signal processor) for speech-synthesis, or a PC card, or may be e.g. a software speech synthesis (Text To Speech) component such as those available from companies like Microsoft®, Nuance®, Acapela Group®, but other software or hardware solutions may also be possible, such as e.g. an external USB component for speech synthesis. In the device 29 shown in Fig 6A a software speech synthesis component 7 is used.

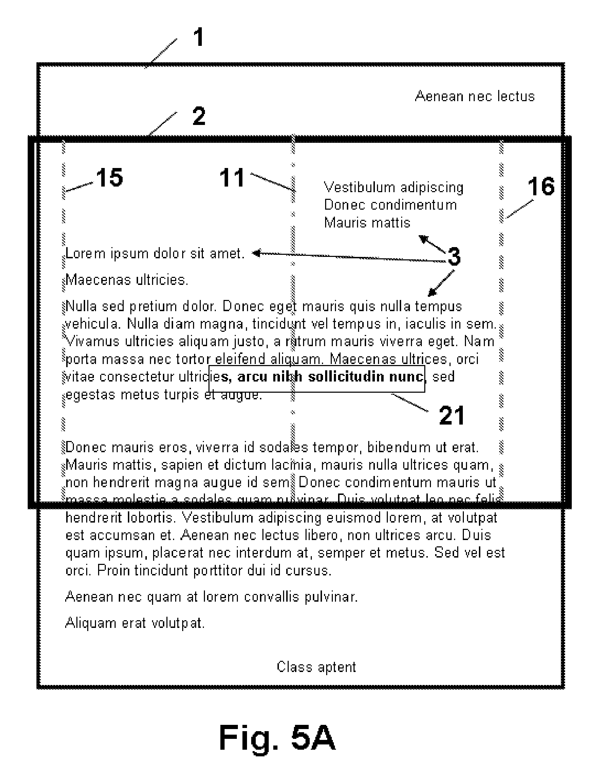

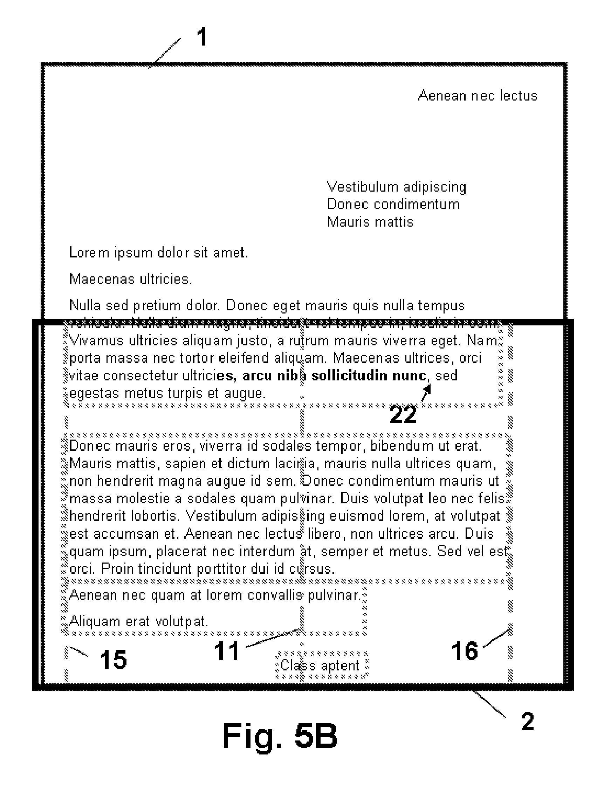

With "camera" 30 is meant a video-camera or a photo-camera, or a combination of one or more of both. Preferably however only a single camera is used. The captured image can be digitized in the camera 30 itself, or externally. Such a camera 30 may e.g. provide an analog YPbPr signal which may be digitized in the camera interface 45 comprising for example a video ADC. For performing optical character recognition for most printed documents a resolution is required of at least 150 dpi (dots per inch). When a 16x9 camera is used having a resolution of 1280 x 720 pixels, the entire width of an A4-page (21 cm) can be captured at a resolution of 1280 pixels / 21 cm = 154,8 dpi, which is sufficient for performing OCR. The height of the image then corresponds to approximately half the height of an A4-page, as shown in Fig 5A and Fig 5B. As most printed documents have a left and right margin without textual information, a resolution of 1280 / 18 cm = 180 dpi can usually be attained by choosing a proper magnification, so that the accuracy of the character recognition increases.

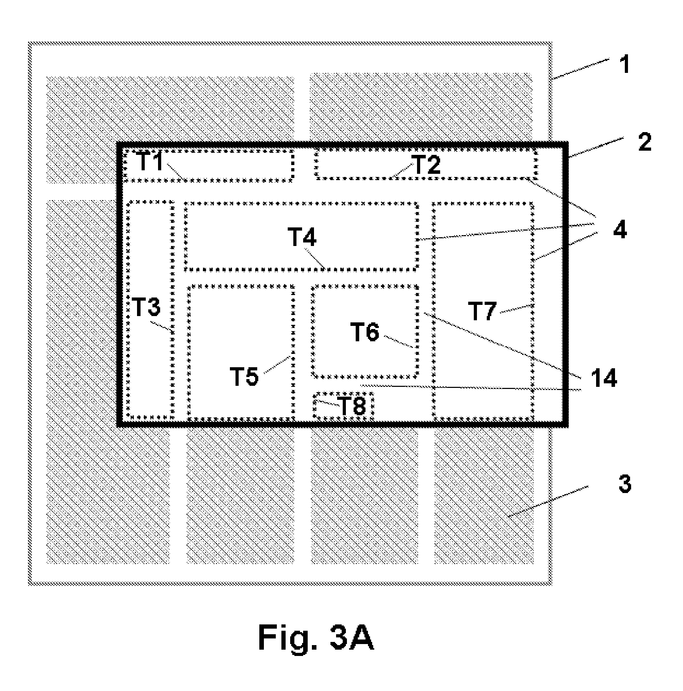

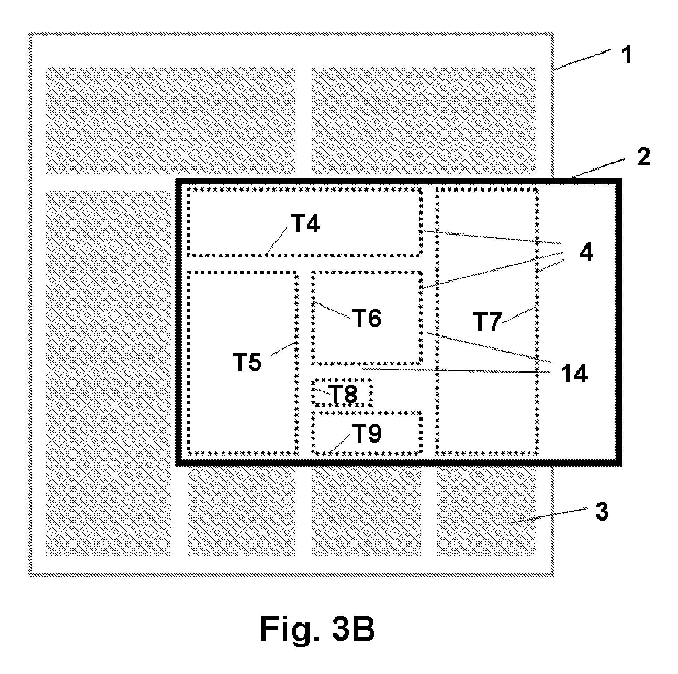

The recognition of the text blocks 4 and the determination of the location of the recognized text blocks 4 in the digitized image 2, further also called "image" or "picture", can e.g. be performed by text block recognition means 101, which might e.g. be part of the OCR component 8, as shown in Fig 7A, whereby the digitized image 2 is offered to the CPU 47 through the FPGA 37, which passes the digital image data (or a pointer thereto) to the OCR-component 8. The digital image data can be the same as the data of the captured image 2, or may e.g. be a monochrome version thereof, whereby the color transcoding for example took place in the FPGA 37. By offering the image 2 to the OCR component 8 in gray values instead of color, bandwidth and time can be saved, without negatively influencing the location of the text blocks 4 or the quality of the digital text data 24. The OCR component 8 then returns text block information 81, e.g. a list of coordinates of recognized text blocks 4. Most OCR components available on the market anno 2009 search for text blocks 4 having a rectangular shape, but the invention is not limited thereto, as long as sufficient information is returned from which the location of text blocks 4 can be derived. For example the location of triangular text blocks could also be returned by means of coordinates of the vertices. It might be sufficient to return the coordinates of only a few vertices instead of all vertices. This is e.g. the case for rectangles, where two extreme vertices can suffice. Based on these coordinates the CPU 47 can determine the location of the recognized text blocks 4 in the digitized image 2, as shown in Fig 3A, where eight text blocks T1-T8 were recognized. Note that the text blocks T1 and T3 in the digitized image 2 are only a fraction of the corresponding text blocks 4 in the original document 1, and that it is desirable that these text blocks are not read, since they probably contain incomplete sentences. T2, T5 and T7 are also fractions of the original text blocks, but as they are captured over their entire width in the digitized image 2, reading them might be desirable. Instead of reading all text-information 3 of all the text blocks T2, T4, T5, T6, T7, T8 as is done in most prior art reading scanners, according to the present invention an intelligent selection is made of which text blocks should, and which should not be read. Thereto the CPU 47 inserts an upright axis 11 in the digitized image 2, at a predetermined position in the digitized image 2, as shown in Fig 4A.

In a practical implementation, the axis 11, even though it can be visualized on screen and/or projected on the document 1 as a helping means, is in fact a virtual axis, so that the "insertion of the axis in the digitized image" or the "determination of text blocks intersected by the axis" need not necessarily be implemented on a bitmap, as this would require a lot of memory and processing power, but preferably these steps are executed by doing calculations on the coordinates of the text blocks 4 and of the axis 11, which is faster. The latter also consumes less power, so that the device 29 will generate less heat allowing a fan to be omitted, which in turn is advantageous for the quality of the audio-signal rendered via the speakers 35.

The inventor has found that the selection of text blocks 4 based on the intersection with an axis 11 inserted on a predetermined location in the image 2 (e.g. the centre of the image), without doing a layout analysis or text-analysis of the captured image data first, yields to a surprisingly good result as far as coherence of the resulting text is concerned, despite its simplicity, but the method also has other advantages.

Because the principle of intersecting text blocks 4 by an axis 11 is a perceptually simple principle, the predictability of which text blocks will be selected for a given position of the document 1 in front of the camera 30 is very high, therefore the use of the device 29 for reading the text blocks of interest is very simple, and thus the time to familiarise with the working of such a device 29 is very short. Thanks to this predictability the user remains in control of which text blocks are to be read.

By selecting text blocks 4 depending on whether they are intersected or not, instead of selecting text blocks which are e.g. located on the right of the axis 11, the user convenience is largely increased, since the document 1 needs to be positioned considerably less accurate in the visual field of the camera 30. This is because the width of a text block 4 is usually much larger than the (often blank) zone 14 between the text blocks 4, and because the user does not have to pay attention on whether the left border of a text block 4 really is located on the right of the axis 11, as otherwise some text information located on the left side of the axis would be lost. The same applies also to the orientation of the document, as it is much easier to position the document 1 in such a way that text blocks 4 located on top of each other are intersected by the axis 11, than making sure that the axis 11 is located precisely between the text blocks. As a result, the method using intersection of text blocks is much more tolerant as regards to the rotation wise positioning of the document 1.

By the efficient selection of relevant text blocks it can be prevented that time is lost for performing optical character recognition (OCR) on text blocks which need not be read anyway. By not converting text blocks 4 which need not be read, significant time savings can be achieved.

By making an efficient choice of relevant text blocks it is also prevented that a user first needs to listen to irrelevant information, before the information which is relevant for him becomes available. In this way a lot of time can be saved and annoyance can be avoided. Thanks to the above mentioned selection predictability, the probability that the user needs to intervene because he or she notices that the text being read does not correspond to the desired information, is considerably smaller than with the known selection methods.

By partitioning a text into text blocks, the conversion to digital text data 24 can happen gradually, so that providing the digital text data for the speech generator can run at least partly in parallel with the optical character recognition of other text blocks. As the first text data is already available after the conversion of the first text block, rather than only after all text blocks have been converted, the response time of the device 29 after providing a document 1 can be largely reduced.

By performing the selection of text blocks intended for the speech generator purely on the basis of their location in the image, other indication means such as e.g. a mouse, a finger, a light pen can be omitted.

Because the axis 11 is upright, preferably vertical, it is possible to stepwise convert a document 1, having relevant text information 3 extending in a long column which cannot be captured in full height in a single image, by applying the above described method repeatedly, thereby shifting the document 1 in the height direction each time. An additional feature for making this "further reading" more efficient will be described further.

Because the selection of text blocks 4 is based on whether or not a text block is intersected by the axis 11, the user retains some control over the selection because he can influence the selection by moving the document 1 in front of the camera 30 and/or by changing the magnification of the camera 30, and since the position of the axis 11 is independent of the image data, the axis 11 is not shifted along. In this way the user can steer the pre-selection of text blocks 4 based on the layout of the document 1, which layout he can recognize despite the impaired vision, while he can leave the actual reading (i.e. the conversion of the textual contents of the text blocks 4 to the audio signal 23 or voice), which content he can not read himself, to the device 29. Retaining this control is a significant advantage over a fully automated system such as e.g. known reading scanners.

In a preferred embodiment of the method according to the present invention, the method of selecting text blocks to be converted also comprises a second selection step, comprising the following steps: - determining a first resp. second distance d41, d61, d42, d62 from the vertices of the selected text blocks T4, T6 to the axis 11, whereby those vertices are chosen which are located on a first resp. second side of the axis 11; - determining a height h4, h6 of each selected text block T4, T6; - calculating a first resp. second weighted average distance g1, g2 from said distances d41, d61, d42, d62 to the axis 11, whereby the weighting factor for each distance is proportional to the height h4, h6 of the text block T4, T6 to which the vertex belongs; - inserting a first resp. second boundary line 12, 13 in the digitized image 2, parallel to the axis 11 on the first resp. second side of the axis 11, at the first resp. second weighted average distance g1, g2 from the axis 11; - making a second selection of text blocks by selecting those text blocks T8 which are located completely between the boundary lines 12, 13 but are not intersected by the axis 11, and adding the second selection of text blocks T8 to the first selection of text blocks T4, T6 thereby forming the selection of text blocks for the speech generator 7.

Preferably thereto the processing electronics 42 of the device 29 according to the invention, additionally comprises distance determination means 104, height determination means 105, calculation means 106, boundary line insertion means 107, which in a preferred embodiment of the device 29 are executed in software on the CPU 47.

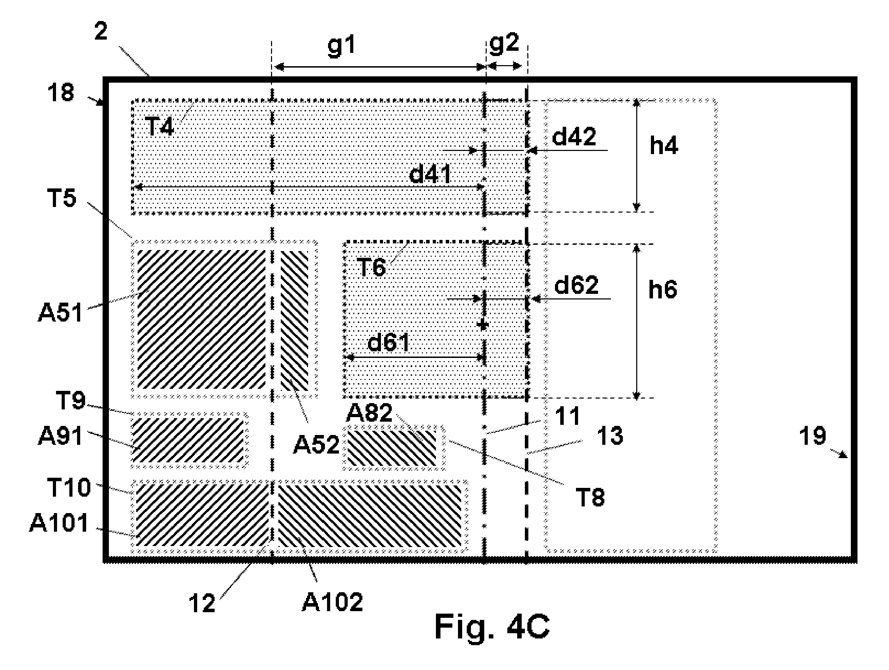

As used herein, with "height" is meant a dimension of the text block 4 measured in a direction parallel to the axis 11, for example, the distance between the points where the axis 11 intersects the text block 4. Note that this definition can also be used for text blocks 4 which are not rectangular. Fig 4C shows how the position of the boundary lines 12, 13 is calculated for a specific example. Since in this example two text blocks T4 and T6 are intersected by the axis 11, the weighted average distances g1 and g2 are calculated as follows:

$$g1 = (d41 * h4 + d61 * h6) / (h4 + h6)$$

$$g2 = (d42 * h4 + d62 * h6) / (h4 + h6)$$

Then two boundary lines 12 and 13 are inserted into the image 2 at a distance of g1 and g2 from the axis 11, and those text blocks which are located completely between the boundary lines 12, 13, i.e. without being intersected by the first or the second boundary line 12, 13 are selected as a second selection of text blocks. In the example of Fig 4C the text block T8 is selected in the second selection step.

In a variant of the second selection step a third boundary line 15 is inserted in the image 2, at a first side of the axis 11 and parallel to the axis 11, and at a distance from the axis equal to the maximum distance of the vertices of the text blocks T4, T6 which were intersected by the axis, which vertices are located at the first side of the axis. In the example above, the third axis 15 would be inserted in the image at a distance g3 = max (d41, d61) = d41 from and parallel to the axis 11, and a fourth boundary line 16 at a distance g4 = max (d42, d62) at the other side of the axis. And all four text blocks 4 located between these two boundary lines 15, 16 would be added to the first selection of text blocks 4. This is shown in Fig 4E, where the text blocks T12 and T14 are added to the first selection which only contained T11 and T13. This variant is particularly useful in cases where it is desirable that all text information in image 2 is read, as is for example the case for the letter shown in Fig 5A. Preferably, the choice of which selection algorithm to be used is adjustable by the user.

After the selection process, the textual information in the selected text blocks 5 needs to be extracted. Thereto the image data 2 is passed to the OCR-component 8, and the position of the selected text blocks 5 to be converted is indicated, for example by means of their coordinates or by means of their sequence number in said list of recognized text blocks 4. The digital text data 24 may e.g. comprise simple ASCII characters, or unicode characters, or may also comprise other information, such as e.g. an inserted pause. The latter can e.g. be coded as a label or as tag information in the digital text data 24. Preferably OCR is only performed on those text blocks 5 that need to be converted to speech, as this yields a serious time benefit. This is however not essential for the invention, as it is e.g. also possible to convert all text information 3 from the entire image 2 into digital text data 24, and making the selection of which part(s) of the digital data 24 that needs to be read afterwards.

In an embodiment of the method according to the present invention, the method of selecting text blocks to be converted also comprises a third selection step, comprising the following steps: - making a third selection of text blocks, by calculating for each text block T5, T10 (referring to Fig 4C) which is intersected by the first or second boundary line 12, 13 but is not selected in the preceding selection steps a first area A51, A101 located outside of the two boundary lines 12, 13, and a second area A52, A102 located between the two boundary lines 12, 13, and calculating a ratio of the second area to a total area of the text block T5, T10, the total area being the sum of the first area and the second area, and selecting those text blocks for which the ratio is larger than or equal to a predetermined percentage; - adding the third selection of text blocks to the first selection of text blocks T4, T6 and the second selection of text blocks T8, thereby forming the selection of text blocks for the speech generator 7.

Preferably thereto the processing electronics 42 of the device 29 according to the invention additionally comprises area determination means 108, which in a preferred embodiment of the device 29 are executed in software on the CPU 47.

This optional third selection step is illustrated referring to Fig 4C, where two boundary lines 12 and 13 were inserted into the image 2 as described above. Subsequently, for each text blocks 4 in the image 2 which is not yet selected in the first selection or in the second selection, and which is intersected by a boundary line 12, 13, i.e. T5 and T10 a first area A51, A101 is determined which is located outside of the boundary lines 12, 13, and a second area A52, A102 located between the two boundary lines 12, 13, and the ratio is calculated of the second area and the total area of the text block. For T5 the ratio is $A52 / (A51 + A52) = 20\%$, and for T10 it is $A102 / (A101 + A102) = 60\%$. If the predetermined ratio, (which may be a hardcoded number or may be adjustable by the user) was e.g. chosen as 50%, then T10 would be added to the selection, but other values for the predetermined ratio are also possible, for example 99%, 90%, 80%, 70%, 60%, 50%. Note that the second selection step is in fact a special case of the third selection step, for which the predetermined number equals 100%, but its implementation may be much simpler, as the device only needs to verify if the vertices of a text block lie between the two boundary lines 12, 13, without having to calculate areas and a ratio.

Preferably the method according to the present invention further comprises the following step: - determining a starting position 22 in the digital text data 24 from where the conversion to the audio signal 23 is to be started; - converting the digital text data 24 to an audio signal 23 by means of speech synthesis. The "audio signal" may e.g. be an analog or a digital audio wave signal. The conversion of digital text data 23 to speech through speech synthesis (Text To Speech) is known from the art, and may for example be implemented as speech synthesis software as shown by component 7 in Fig 7A, which is for example commercially available from the company Nuance Communications®. Preferably thereto the device 29 according to the present invention comprises: - starting position determination means 109 for determining a starting position 22 in the digital text data 24 from where the conversion to an audio signal 23 is to be started; - the speech generator 7 for converting the digital text data 24 to an audio signal 23 starting from the starting position 22. In an embodiment of the present invention, the starting position may e.g. be the first word of the first selected text block 5, but a more sophisticated starting point determination, ideal for reading text information extending over more than one image, is also possible, as described further.

In a preferred embodiment of the method according to the present invention, a centre of the digitized image is determined, which centre is chosen as the predetermined position for inserting the upright axis.

By inserting the axis in the middle of the digitized image, the interesting text information will also be captured near the centre of the visual field of the camera. As a camera usually exhibits the least distortion in the middle of its visual field, the edges of the text blocks will show the least distortion, which is beneficial during the recognition of the text blocks. Moreover, the optical character recognition will yield better results. The inventor has also found that the image information located in the centre of the image is not moved when the magnification of the camera is changed, so that the selection of text blocks is less dependent on the magnification of the camera (apart from the text blocks which are shifted inside or outside the image). This saves time and enhances the user convenience since the position of the document need not be corrected when the magnification is changed. By inserting the axis in the middle of the digitized image, the user also gets a good overview on the layout of the document, as a portion of the text blocks located on the left and on the right of the selected text blocks are also visible in the digitized image.

Although preferably the upright axis 11 is located in the centre m of the digitized image 2, any other position found suitable by the person skilled in the art may also be used. For example the predefined position where the axis 11 is inserted may also be a point in the image located at a distance of 10%, 20%, 25%, 33%, 45% or any other percentage of the width of the image 2 from the left side 18 or the right side 19 of the image 2. Essential for the invention is that the location of the axis 11 is independent of the location of the recognized text blocks 4.

In an alternative embodiment of the method according to the present invention, the predetermined position for inserting the upright axis 11 is adjustable.

By making the predetermined position where the axis is inserted into the image 2 adjustable, some form of customization is possible. The user would then be able to choose between one of the possible options. In this way, the wishes or limitations of the user can be taken into account in an optimal way. For example, a person who sees only from the left eye, could set the position of the axis 11 in a slightly more left position of the image 2.

In an embodiment of the method according to the present invention, an image of the axis 11 is projected on the document 1 which is located in the field of vision of the camera 30.

By projecting an image of the axis 11 on the document 1 a user can clearly see where the text blocks are located with regards to the position of the axis 11, so that he can adjust the position of the document 1 with respect to the camera 30 if so desired. The projection may for example be implemented by means of a light beam. Preferably also the locations of the selected text blocks 5 are projected on the document 1, so that the user gets visual feedback about which text blocks are selected (and thus will be read), even before the reading has started, giving him the opportunity to adjust the position of the document 1 if required. To this end, the device 29 of the present invention preferably comprises projection means 110 (not shown). Such projection means are known in the art, and may e.g. project a light beam.

In a preferred embodiment of the method according to the present invention, a processed image 26 is formed from the captured and digitized image 2, and is displayed on a screen 34 (or monitor or display or the like). Preferably one or more of the following elements are inserted in the processed image 26: the axis 11, the recognized text blocks 4, the selected text blocks 5.

Thereto the device 29 according to the present invention preferably comprises image processing means 111, which can for example be implemented in the FPGA as video-overlay. In the device of Fig 6A thereto the coordinates of the elements to be displayed are delivered by the CPU 47 to the FPGA 37.

When the device 29 comprises a screen 34, the image 2 of the document 1 can be displayed on the screen, possibly after enlargement (magnification) and/or change of colors. Preferably for the enlargement where possible the optical zoom of the camera 30 is used, but the enlargement may also be performed by image processing on the digitized image 2 using known scaling and filtering techniques. To increase the readability of the text information on the screen 34, for example the colors may be inverted, or the picture on the screen may be rendered as a grey level picture with contrast enhancement. In the processed image 26 also an image of the axis 11 may be introduced, allowing a user to see on the screen 34 which text blocks 4 are intersected by the axis 11. Preferably also the locations of the recognized text blocks 4 are displayed on the screen 34. Preferably also the locations of the selected text blocks 5 are displayed on the screen 34. In this way the user gets visual feedback from the device 29 about which text blocks 5 will be read, even before the reading has actually started. In case the selection does not correspond to the wishes of the user, he can still influence the selection e.g. by shifting the document 1 in front of the camera 30 or by changing the magnification of the camera 30, as described above.

As mentioned above, instead of choosing the first word of a selected text block 5 as the starting position from where the reading starts, a more sophisticated starting point determination can be implemented, ideal for reading text information 3 extending over more than one image 2 in height direction.

Preferably the method according to the present invention thereto further comprises the following step: g) keeping a progress indicator 20 up to date during the conversion of the digital text data 24 into the audio signal 23, for indicating which part of the text data 24 is already converted into the audio signal 23; h) determining when the conversion of the digital text data 24 to the audio signal 23 has stopped, and buffering a portion of the last converted digital text data 24 in a memory 33 as stop data 21; i) performing steps a) to f) for a second image, whereby said determination of the starting position 22 is performed by checking whether stop data 21 is buffered in the memory 33, in which case the buffered stop data 21 is retrieved from the memory 33, and the digital text data 24 is scanned for a position S wherein the text data matches said stop data 21 according to a predefined matching criterion, and choosing the position S as the starting position 22 if the matching criterion is satisfied, or choosing the beginning of the digital text data 24 as the starting position 22 if the matching criterion is not satisfied or in case no stop data 21 was buffered in the memory 33.

Note that this feature for reading a document 1 in several steps, comprising the steps of remembering a portion of the text data 24 which was last read, searching the position S of that portion in a second image, and resuming the reading from that position onwards, can also be used in other reading devices, and is not necessarily linked to the improved selection mechanism described above using the axis 11 and/or the boundary lines.

For performing this method, the device 29 according to the invention preferably comprises: g) progress tracking means 112 for keeping a progress indicator 20 up to date during the conversion of the digital text data 24 into the audio signal 23, for indicating which part of the text data 24 is already converted into the audio signal 23; h) stop detection means 113 for determining when the conversion of the digital text data 24 to the audio signal 23 has stopped, and stop data determination means 114 for determining the last converted digital text data 24, and adapted for buffering a portion thereof in a memory 33 under the form of stop data 21 when the stop detection means 113 have determined that the conversion of the digital text data 24 to the audio signal 23 has stopped; - said starting position determination means 109 being adapted for checking whether stop data 21 is buffered in the memory 33, and for retrieving the buffered stop data 21 from the memory 33, and for scanning the digital text data 24 for a position S wherein the text data matches said stop data 21 according to a predefined matching criterion, and for selecting the position S as the starting position 22 if the matching criterion is satisfied, and for choosing the beginning of the digital text data 24 as the starting position 22 if the matching criterion is not satisfied or in case no stop data 21 was buffered in the memory 33.

Preferably the progress tracking means 112, the stop detection means 113 and the stop data determination means 114 are implemented in software on the CPU 47. In the device of Fig 6A the progress tracking means 112 may for example be included in the speech generator component 7.

By tracking said progress indicator 20 it is possible to identify the text which has already been converted into an audio signal 23, and to buffer a portion of the text data in a memory 33 in the form of stop data 21 when the reading stops, so that this stop data 21 can be retrieved later, and can be searched for in the digital text data of another image. A typical use of this feature is made when reading a document with a long upright column of text which cannot be captured in a single image 2. When the document 1 is read, and the user pushes the stop button, the last few words (or letters) that were read are identified, and stored in the memory 33. When the user pushes the start button without moving the document 1, the reading will be resumed from the position last read, in which way basically a pause function is implemented. If however the document was shifted in front of the camera 30 before the user pushes the start button, and if the stop data is found in the new image, then the device 29 will actually continue reading further where it left off last time. In this way, the entire column can be read efficiently, even if it does not fit in a single image. Based on the progress indicator 20 is also possible to indicate the position of the word actually being read on the display 34. Such indication can e.g. be implemented by changing the color of the word being read, or underlining the word, or drawing a box around the word, or any other means known to the person skilled in the art.

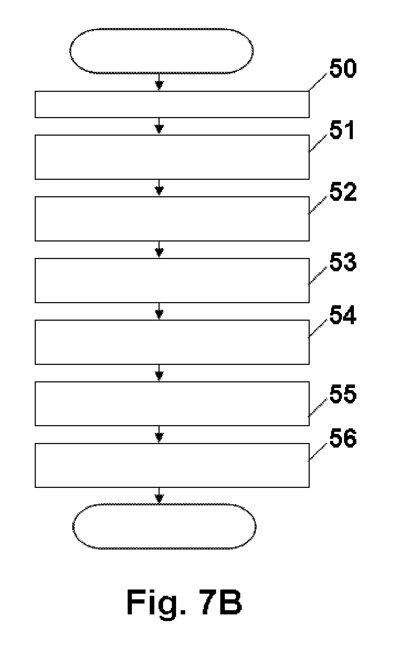

To stop data is buffered when the reading stops, which for example typically occurs when the end of the digital text data 23 is reached or because a stop command was given by the user. This is illustrated in Fig 5A, where the user has stopped the reading after the word "nunc". In the example of Figure 5A, the stop data "s, arcu sollicitudin nunc" is chosen to be thirty (30) characters long, but the person skilled in the art may also choose a different string length, preferably a length of 15-45 characters, more preferably a length of 20 - 40 characters, even more preferably a length of 25-35 characters. In another embodiment, the stop data 21 can also be chosen as a predetermined number of words, e.g. 3-10 words, or a predetermined number of text lines, e.g. 1-3 text lines. Such text lines may for example be separated by line break characters in the digital text data 23. The inventor has found that a too short string length leads to more "false positives" when the stop data 21 is searched in other digital text data for example of the same document 1 but shifted in the field of view of the camera 30, while a too long string length requires more time to be found, and increases the risk that the stop data 21 is shifted outside of the image when the document 1 is shifted too far. Fig 5B shows the image 2 of the document 1 after the user has shifted the document upwards in the field of view of the camera 30, and after a new start command is given. The flow diagram of Figure 7B shows the steps that will be carried out. In step 50, a new image 2 is captured by the camera 30 and the image is digitized, for example by a digital camera or by a video ADC outside of the camera, as may e.g. be present in the camera interface 45. In step 51, text blocks 4 are recognized and their location in the digitized image 2 is determined. This step can for example be performed by the OCR component 8, in particular through the text block detection means 101 being part of it. In step 52 the desired text blocks are selected by a method as described above, whereby an axis 11 is inserted into the image, and text blocks 4 that are intersected by the axis 11 are selected in a first step, which selection can be supplemented with text blocks 4 located between the third and fourth boundary line 15, 16 as described above, or with text blocks having an area at least a predetermined portion of which is located between the first and second boundary lines 12, 13, as described above. In the example of Figure 5B, all text blocks 4 were already intersected by the axis 11. In step 53 the selected text blocks 5 are converted to digital text data 24, using optical character recognition (OCR). In a preferred embodiment of the device 29 according to the present invention, this step is performed by sending information 82 containing a list of the selected text blocks 5 to the OCR component 8, which through information 83 returns the result after character recognition in the form of digital text data 24. This may e.g. be ASCII text or Unicode text. In step 54, the starting position 22 is determined from where the reading in the digital text data should start.

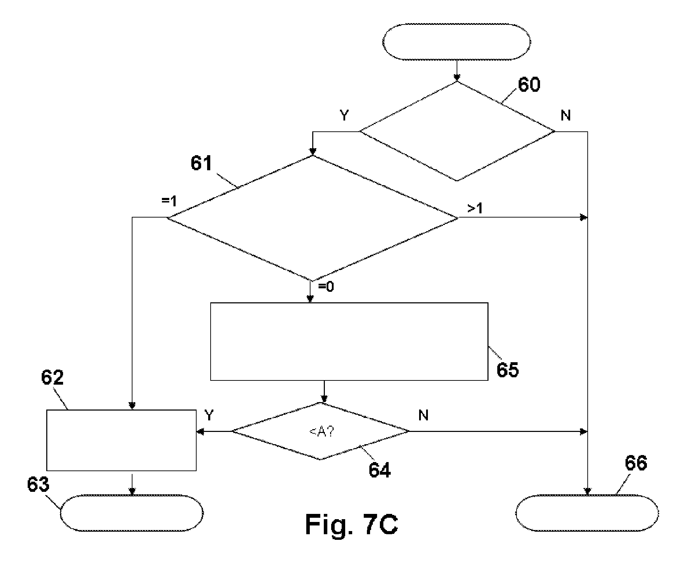

Fig 7C shows in detail how the starting position 22 is determined in a preferred embodiment of the device 29 according to the present invention. In step 60 is determined whether stop data 21 is present in the memory 33. If that was not the case, the method proceeds with step 66 where the beginning of the digital text data 24 is chosen as the starting position 22. In the example of Figure 5B there is stop data 21 present in the memory, and step 61 is executed, where the stop data is retrieved from the memory, then the number of occurrences of the stop data 21 in the digital text data 24 is determined according to an exact match of the character string of e.g. thirty (30) characters. If the stop data is found exactly once in a position S in the digital text data 24, then step 62 is executed wherein the position S is chosen as the new starting position 22, and step 63 where the text is read from the starting position S. Preferably however, in practice, if possible, the reading is started from a position slightly before S, for example a predetermined number of characters before S, such as e.g. 10-20 characters, or a predetermined number of words before S, e.g. 3-5 words. If the position S is close to the very beginning of the digital text data 24, then the beginning of the digital text data 24 may be chosen as a starting position 22. If in step 61 multiple positions for S are found where the stop data 21 exactly matches the text data, then in the example of Fig 7C (arrow ">1" leaving step 61) the beginning of the digital text data 22 is chosen as the starting position. The person skilled in the art may however also choose one of the matching positions as the starting position. Due to noise in the image it may happen that some characters of the text information 3 in the digital text data 24 have been dropped, or changed into other characters, or that certain characters were added. Therefore, if the stop data 21 was not found back in the digital text data using an exact match, in step 65 a position S is searched which gives the best approximation of the stop data 21 in the digital text data 24. An example of such a best approximation may be found using the "Levenshtein distance", an algorithm known in the art, which is a calculation of a deviation between two character strings. In step 64 it is determined whether the deviation is less than a predetermined "distance" A, for example chosen to be three (3), and if so, it is decided in step 62 that the stop data 21 was found after all, despite the slight deviation. Otherwise it is decided that the stop data is not found, and in step 66 the beginning of the digital text data is selected as the new starting position. In the example of Figure 5B, the predetermined value of A may for example be 3, which is 10% of the string length of the stop data of 30 characters, but the person skilled in the art may choose other values, such as e.g. 2 or 4 or 5, or any another suitable number.

Referring to Figure 7B, in step 55 the digital text data 24 is then converted to speech until the end of the digital text data 24 is reached, or until a stop command is given by the user, for example through the control panel 41. If the reading is stopped, then in step 56 again a portion of the last text read is buffered in memory 33 in the form of stop data 21. The detection whether the conversion into speech has stopped may e.g. be implemented by using the progress indicator 20 provided by the speech generator 7 through information 85 (Fig 7A). This information may e.g. be retrieved on an interrupt-basis or a polling-basis.

As shown in Fig 5A and 5B, this feature of "reading further" is particularly useful when, for example an A4 sheet needs to be read in two or more steps. Thanks to this feature, the user does not have to search himself where the last read stop data 22 is exactly located, and shifting that word to the edge of the image 2, because the device 29 does this instead, albeit in another way. As shown in Figure 5B this allows a very rough shift of the document 1 in view of the camera 30. In the prior art a user would shift the document upwards at random, and would have to listen to a partial repetition of what was read already, or miss a part if he shifted the document too high. This feature provides a user convenience which should not be underestimated, offering significant time savings to the user.

Referring to Figure 6B the FPGA may for example process the captured and digitized image 2 by implement the insertion of line segments via video overlay thus forming the processed image 26. In this way the axis 11, the recognized text blocks 4 and the selected text blocks 5 may be displayed, or the word currently being read may be indicated or highlighted, for example by drawing a rectangle around the word. The coordinates of these segments may for example be calculated by the software running on the CPU 47 and passed on to the FGPA via the bus 87.

Fig 7A shows schematically how the CPU 47 exchanges certain data between the FPGA 37, the OCR component 8 and the speech generator component 7, as described above. Via interface 87 the following data may be transferred from the FPGA 37 to the CPU 47: image data 2, or commands from the control panel 41, and the following information may be transferred from the CPU 47 to the FPGA 37: the location of the axis 11, the location of the text blocks 4, the location of the selected text block 5, the progress indicator 20, the coordinates in the image of the word currently being read, and the audio signal 23, also called speech. The control component of the software can pass image data to the OCR component via the interface 80. This image data may be the same as the digitized image 2, but may also be a gray level image. In this way bandwidth and time can be saved, and power consumption can be reduced. Via interface 81 the OCR component can give text block information to the CPU 47, e.g. a list of recognized text blocks 5 with their coordinates. Via interface 82 the CPU 47 can give information about the selected text blocks 5 to the OCR component 8, for example by using their reference number in the list, or by using their coordinates. Via interface 83 the OCR component can give the result of the optical character recognition to the CPU 47, for example as ASCII or Unicode characters. Via interface 84 the CPU can pass this OCR result to the speech generator component 7. Via interface 85, the speech generator component 7 can pass progress information to the CPU 47. Via interface 23, the speech generator component 7 can pass audio data to the CPU 47.

Preferably, the image processing means 111 are implemented in the FPGA.

Preferably the device according to the present invention also comprises lighting elements 36 (not shown) for illuminating the document 1 located in the field of view of the camera 30, and at least one speaker 35 for reproducing the audio signal 23. Preferably these lighting elements are LEDs. Preferably a display 36 is used which includes one or more speakers 35, but it is also possible to connect stand-alone speaker(s) 35 directly to the processing electronics 42 through a separate audio output. (Not shown).

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

**Claims**

1. Method for converting text information (3) from a document (1), which text information (3) is presented in the form of text blocks (4), to digital text data (24) for a speech generator (7), the document (1) being located in a field of vision of a camera (30), the method comprising the following steps:

   a) capturing an image of at least a portion of the document (1) with said text information (3) by means of the camera (30), and digitizing the image;
   b) recognizing text blocks and determining a location of the recognized text blocks (4) in the digitized image (2);
   c) selecting text blocks (5) for the speech generator (7) from the recognized text blocks (4);
   d) converting the selected text blocks (5) from the digitized image (2) to digital text data (24) by means of optical character recognition;

   **characterized in that** the selection of text blocks comprises the steps of:

   - making a first selection of text blocks by selecting those text blocks (T4, T6) which are intersected by an upright axis (11) inserted into a predetermined position in the digitized image (2), which position is independent of the location of the recognized text blocks (4) and of their textual contents;
   - determining a first resp. second distance (d41, d61), (d42, d62) from the vertices of the selected text blocks (T4, T6) to the axis (11), whereby those vertices are chosen which are located on a first resp. second side of the axis (11);
   - determining a height (h4, h6) of each selected text block (T4, T6);
   - calculating a first resp. second weighted average distance (g1, g2) from said first resp. second distances (d41, d61), (d42, d62) to the axis (11), whereby the weighting factor for each distance is proportional to the height (h4, h6) of the text block (T4, T6) to which the vertex belongs;
   - inserting a first resp. second boundary line (12, 13) in the digitized image (2), parallel to the axis (11) on the first resp. second side of the axis (11), at the first resp. second weighted average distance (g1, g2) from the axis (11);
   - making a second selection of text blocks by selecting those text blocks (T8) which are located completely between the boundary lines (12, 13) but are not intersected by the axis (11), and adding the second selection of text blocks (T8) to the first selection of text blocks (T4, T6) thereby forming the selection of text blocks for the speech generator (7).

2. Method according to claim 1, wherein the selection of text blocks further comprises the steps of:

   - making a third selection of text blocks, by calculating for each text block (T5, T10) which is intersected by the first or second boundary line (12, 13) but is not selected in the preceding selection steps a first area (A51, A101) located outside of the two boundary lines (12, 13), and a second area (A52, A102) located between the two boundary lines (12, 13), and calculating a ratio of the second area to a total area of the text block (T5, T10), the total area being the sum of the first area and the second area, and selecting those text blocks for which the ratio is larger than or equal to a predetermined percentage;
   - adding the third selection of text blocks to the first and the second selection of text blocks, thereby forming the selection of text blocks for the speech generator (7).

3. Method according to claim 1 or 2, further comprising the steps of:

   e) determining a starting position (22) in the digital text data (24) from where the conversion to the audio signal (23) is to be started;
   f) converting the digital text data (24) to an audio signal (23) by means of speech synthesis from the starting position (22).

4. Method according to any one of the preceding claims, wherein the predetermined position for inserting the upright axis (11) is adjustable.

5. Method according to any one of the preceding claims, wherein an image of the axis (11) is projected on the document (1).

6. Method according to any one of the preceding claims, wherein a processed image (26) is formed from the captured and digitized image (2), and is displayed on a screen (34), and wherein one or more of the following elements is inserted in the processed image (26): the axis (11), the recognized text blocks (4), the selected text blocks (5).

7. Method according to any one of the preceding claims, further comprising the steps of:

g) keeping a progress indicator (20) up to date during the conversion of the digital text data (24) into the audio signal (23), for indicating which part of the text data (24) is already converted into the audio signal (23);

h) determining when the conversion of the digital text data (24) to the audio signal (23) has stopped, and buffering a portion of the last converted digital text data (24) in a memory (33) in the form of stop data (21);

i) performing steps a) to f) for a second image, whereby said determination of the starting position (22) is performed by checking whether stop data (21) is buffered in the memory (33), in which case the buffered stop data (21) is retrieved from the memory (33), and the digital text data (24) is scanned for a position (S) wherein the text data matches said stop data (21) according to a predefined matching criterion, and choosing the position (S) as the starting position (22) if the matching criterion is satisfied, or choosing the beginning of the digital text data (24) as the starting position (22) if the matching criterion is not satisfied or in case no stop data (21) was buffered in the memory (33).

8. Device (29) for converting text information (3) from a document (1), which text information (3) is presented in the form of text blocks (4), to digital text data (24) for a speech generator (7), the device comprising:

a) a camera (30) for capturing an image of at least a portion of the document (1) with said text information (3), and digitizing means (45) for digitizing the image captured by the camera (30);

b) text block recognition means (101) for recognizing text blocks and for determining a location of the recognized text blocks (4) in the digitized image (2);

c) text block selection means (102) for selecting text blocks (5) for the speech generator (7) from the recognized text blocks (4);

d) optical character recognition means (8) for converting selected text blocks (5) from the digitized image (2) to digital text data (24) for the speech generator (7);

**characterized in that** the device (29) further comprises:

- axis insertion means (103) for inserting an upright axis (11) into a predetermined position in the digitized image (2), which position is independent of the location of the recognized text blocks (4) and of their textual contents, whereby the text block selection means (102) are adapted for selecting those text blocks (4) which are intersected by said axis (11) as a first selection of text blocks;

- distance determination means (104) for determining a first resp. second distance (d41, d61), (d42, d62) from the vertices of the selected text blocks (T4, T6) to the axis (11), whereby those vertices are chosen which are located on a first resp. second side of the axis (11);

- height determination means (105) for determining a height (h4, h6) of each selected text block (T4, T6);

- calculation means (106) for calculating a first resp. second weighted average distance (g1, g2) from said first resp. second distances (d41, d61), (d42, d62) to the axis (11), whereby the weighting factor for each distance is proportional to the height (h4, h6) of the text block (T4, T6) to which the vertex belongs;

- boundary line insertion means (107) for inserting a first resp. second boundary line (12, 13) in the digitized image (2), parallel to the axis (11) on the first resp. second side of the axis (11), at the first resp. second weighted average distance (g1, g2) from the axis (11), whereby the text block selection means (102) are adapted for selecting those text blocks (4) which are located completely between the boundary lines (12, 13) but are not intersected by said axis (11) as a second selection of text blocks, and for adding the second selection of text blocks to the first selection of text blocks thereby forming the selection of text blocks for the speech generator (7).

9. Device (29) according to claim 8, wherein the device (29) further comprises:

- area determination means (108) for calculating for each text block (T5, T10) which is intersected by the first or second boundary line (12, 13) but is not selected in the preceding selection steps, a first area (A51, A101) located outside of the two boundary lines (12, 13), and a second area (A52, A102) located between the two boundary lines (12, 13), whereby the calculation means (106) are adapted for calculating a ratio of the second area to a total area of the text block, the total area being the sum of the first area and the second area, and whereby the text block selection means (102) are adapted for selecting those text blocks for which said ratio is larger than or equal to a predetermined percentage as a third selection of text blocks, and for adding the third selection of text blocks to the first and the second selection of text blocks, thereby forming the selection of text blocks for the speech generator (7).

10. Device (29) according to claim 8 or 9, further comprising:

e) starting position determination means (109) for determining a starting position (22) in the digital text data (24) from where the conversion to an audio signal (23) is to be started;
f) the speech generator (7) for converting the digital text data (24) to an audio signal (23) starting from the starting position (22).

11. Device (29) according to any one of the claims 8-10, wherein the axis insertion means (103) is adapted for inserting the upright axis (11) in an adjustable position of the digitized image (2).

12. Device (29) according to any one of the claims 8-11, further comprising projection means (110) for projecting an image of the axis (11) on the document (1) located in the field of vision of the camera (30).

13. Device (29) according to any one of the claims 8-12, further comprising image processing means (111) adapted for forming a processed image (26) from the captured and digitized image (2) for display on a screen (34), and adapted for inserting one or more of the following elements in the processed image (26): the axis (11), the recognized text blocks (4), the selected text blocks (5).

14. Device (29) according to any one of the claims 8-13, further comprising:

g) progress tracking means (112) for keeping a progress indicator (20) up to date during the conversion of the digital text data (24) into the audio signal (23), for indicating which part of the text data (24) is already converted into the audio signal (23);
h) stop detection means (113) for determining when the conversion of the digital text data (24) to the audio signal (23) has stopped, and stop data determination means (114) for determining the last converted digital text data (24), and adapted for buffering a portion thereof in a memory (33) under the form of stop data (21) when the stop detection means (113) have determined that the conversion of the digital text data (24) to the audio signal (23) has stopped;

- said starting position determination means (109) being adapted for checking whether stop data (21) is buffered in the memory (33), and for retrieving the buffered stop data (21) from the memory (33), and for scanning the digital text data (24) for a position (S) wherein the text data matches said stop data (21) according to a predefined matching criterion, and for selecting the position (S) as the starting position (22) if the matching criterion is satisfied, and for choosing the beginning of the digital text data (24) as the starting position (22) if the matching criterion is not satisfied or in case no stop data (21) was buffered in the memory (33).

15. A computer program stored on a computer readable medium and comprising computer readable code for performing the method according to any one of the claims 1-7 on a device 29 according to any one of the claims 8-14.

Fig. 1

Fig. 2A

Abc defg hij
Klm nop qrst

Fig. 2B

## Fig. 3A

**Fig. 3B**

**Fig. 4A**

Fig. 4B

Fig. 4C

T11

T12   T13   T14

12   11   13

## Fig. 4D

T11

T12   T13   T14

15   16

11

## Fig. 4E

**1**

Aenean nec lectus

**2**

**15** **11** Vestibulum adipiscing
Donec condimentum
Mauris mattis

**16**

Lorem ipsum dolor sit amet. **3**

Maecenas ultricies.

Nulla sed pretium dolor. Donec eget mauris quis nulla tempus vehicula. Nulla diam magna, tincidunt vel tempus in, iaculis in sem. Vivamus ultricies aliquam justo, a rutrum mauris viverra eget. Nam porta massa nec tortor eleifend aliquam. Maecenas ultrices, orci vitae consectetur ultricies, arcu nibh sollicitudin nunc, sed egestas metus turpis et augue.

**21**

Donec mauris eros, viverra id sodales tempor, bibendum ut erat. Mauris mattis, sapien et dictum lacinia, mauris nulla ultrices quam, non hendrerit magna augue id sem. Donec condimentum mauris ut massa molestie a sodales quam pulvinar. Duis volutpat leo nec felis hendrerit lobortis. Vestibulum adipiscing euismod lorem, at volutpat est accumsan et. Aenean nec lectus libero, non ultrices arcu. Duis quam ipsum, placerat nec interdum at, semper et metus. Sed vel est orci. Proin tincidunt porttitor dui id cursus.

Aenean nec quam at lorem convallis pulvinar.

Aliquam erat volutpat.

Class aptent

# Fig. 5A

1

Aenean nec lectus

Vestibulum adipiscing
Donec condimentum
Mauris mattis

Lorem ipsum dolor sit amet.

Maecenas ultricies.

Nulla sed pretium dolor. Donec eget mauris quis nulla tempus

Vivamus ultricies aliquam justo, a rutrum mauris viverra eget. Nam porta massa nec tortor eleifend aliquam. Maecenas ultrices, orci vitae consectetur ultrici**es, arcu nibh sollicitudin nunc**, sed egestas metus turpis et augue.

22

Donec mauris eros, viverra id sodales tempor, bibendum ut erat. Mauris mattis, sapien et dictum lacinia, mauris nulla ultrices quam, non hendrerit magna augue id sem. Donec condimentum mauris ut massa molestie a sodales quam pulvinar. Duis volutpat leo nec felis hendrerit lobortis. Vestibulum adipiscing euismod lorem, at volutpat est accumsan et. Aenean nec lectus libero, non ultrices arcu. Duis quam ipsum, placerat nec interdum at, semper et metus. Sed vel est orci. Proin tincidunt porttitor dui id cursus.

Aenean nec quam at lorem convallis pulvinar.

Aliquam erat volutpat.

15    11    Class aptent    16

2

# Fig. 5B

Fig. 6A

Fig. 6B

Fig. 7A

Fig. 7B

Fig. 7C

Europäisches
Patentamt

European
Patent Office

Office européen
des brevets

## EUROPEAN SEARCH REPORT

Application Number

EP 10 17 5319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/006235 A1 (KURZWEIL RAYMOND C [US] ET AL) 12 January 2006 (2006-01-12) * abstract * * paragraphs [0160] - [0162], [0170] - [0171], [0209], [0211] - [0214], [0219]; figure 1 * | 1 | INV. G06K9/32 G09B21/00 G10L13/04 |
| A | US 2005/288932 A1 (KURZWEIL RAYMOND C [US] ET AL) 29 December 2005 (2005-12-29) * abstract * * paragraphs [0098] - [0106], [0129] - [0130], [0170] - [0174], [0220]; figure 1 * | 1 | |
| A,P | Koba Vision: "KOBA Vision - Vocatex - De leesrevolutie voor slechtzienden" 4 November 2009 (2009-11-04), XP007913325 Retrieved from the Internet: URL:http://www.saarberg.info/brochures/nl/ NL_Vocatex_NL.pdf [retrieved on 2010-06-02] * page 4 - page 5 * | 1 | |
| A | US 6 115 482 A (SEARS JAMES T [US] ET AL) 5 September 2000 (2000-09-05) * abstract * * column 14, line 10 - line 39 * * column 9, line 40 - line 64 * | 1 | TECHNICAL FIELDS SEARCHED (IPC) G06K G09B G10L |
| A | WO 2006/042292 A2 (FREEDOM SCIENT INC [US]; GORDON GLEN [US]; STEPHEN JOSEPH K [US]; DAME) 20 April 2006 (2006-04-20) * abstract * * pages 1-3 * | 1 | |
| A | WO 92/20033 A1 (SUSSMAN MICHAEL [US]) 12 November 1992 (1992-11-12) | 1 | |

-/--

The present search report has been drawn up for all claims

| Place of search | Date of completion of the search | Examiner |
|---|---|---|
| The Hague | 26 October 2010 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 10 17 5319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 980 706 A (SOMEYA AKIHIKO [JP]) 25 December 1990 (1990-12-25) ----- | 1 | |
| A | EP 1 081 589 A2 (NOKIA MOBILE PHONES LTD [FI] NOKIA CORP [FI]) 7 March 2001 (2001-03-07) ----- | 1 | |

TECHNICAL FIELDS
SEARCHED      (IPC)

The present search report has been drawn up for all claims

| Place of search | Date of completion of the search | Examiner |
|---|---|---|
| The Hague | 26 October 2010 | Versluis, Anton |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 10 17 5319

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2010

| Patent document cited in search report | | Publication date | Patent family member(s) | | Publication date |
|---|---|---|---|---|---|
| US 2006006235 | A1 | 12-01-2006 | NONE | | |
| US 2005288932 | A1 | 29-12-2005 | US | 2010088099 A1 | 08-04-2010 |
| US 6115482 | A | 05-09-2000 | NONE | | |
| WO 2006042292 | A2 | 20-04-2006 | EP | 1817695 A2 | 15-08-2007 |
| WO 9220033 | A1 | 12-11-1992 | AU | 656401 B2 | 02-02-1995 |
| | | | AU | 2168292 A | 21-12-1992 |
| | | | DE | 69206796 D1 | 25-01-1996 |
| | | | DE | 69206796 T2 | 13-02-1997 |
| | | | EP | 0583411 A1 | 23-02-1994 |
| | | | ES | 2083178 T3 | 01-04-1996 |
| | | | JP | 6507256 T | 11-08-1994 |
| | | | US | 5586196 A | 17-12-1996 |
| US 4980706 | A | 25-12-1990 | JP | 2122761 A | 10-05-1990 |
| EP 1081589 | A2 | 07-03-2001 | GB | 2353927 A | 07-03-2001 |
| | | | US | 7174295 B1 | 06-02-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006006235 A